# EUROPEAN PATENT APPLICATION

(11) **EP 1 595 663 A2**
(43) Date of publication of application: **16.11.2005**
(21) Application number: 05291045.2
(22) Date of filing: 13.05.2005
(51) Int. Cl.: B27N 3/28, B27N 1/00

(54) **Method of manufacturing densified firelog from unwanted and diseased wood, and method of doing business regarding same**

(30) Priority: 14.05.2004 US 571108 P
(71) Applicant: Summit Views Llc, 95030 Los Gatos, California (US)
(72) Inventor: Young, Jennifer J., Los Gatos California 95033 (US); Weissman, Gregg D., Watsonville California 95076 (US)
(74) Representative: Burbaud, Eric

(57) **Abstract**

A method of manufacturing firelogs from unwanted or diseased forest wood. The method includes the steps of gathering such unwanted wood products from a forest and on-site grinding and drying those wood products into ground material prior to extruding same into a firelog. The sale of the firelog can then be used to pay for further gathering of the unwanted wood. Moreover, the machines used to grind and dry the material can be powered by burning the unwanted firewood as well.

## Description

### Cross-Reference to Related Application

This application claims priority to U.S. Provisional Serial No. 60/571,108 filed on May 14, 2004.

### Field of the Disclosure

The present disclosure generally related to densified wood products, and more particularly relates to methods of manufacturing such wood products or firelogs.

### Background of the Disclosure

The invention described in this filing pertains to the field of the manufacture of artificial firelogs, and a system for processing wood waste from forest, woodland, wildland, and urban-wildland interface regions, into densified wood firelogs, and a system whereby utilizing unwanted wood materials in forested and wooded areas as raw material in such firelogs enables otherwise cost-prohibitive, but important, thinning operations. Additionally, the invention enables the high-value utilization of diseased and fungus-infected wood needing to be cleared from these areas.

It has become apparent and much discussed over the last several years that fuel buildup in forested and wooded areas is a significant contributor to costly and dangerous wildfires. The problem is well known and well documented. What is not well known, and what has been the subject of much research, as shown in many easily available documents, is a method of making the clearing and disposal of such unwanted fuel buildup cost-effective and feasible. One component of the unwanted fuel buildup is the presence throughout large regions of California, for example, of trees killed by infection by the fungal pathogen causing "Sudden Oak Death." It is also equally important, if not possibly more so, to be able to manage this diseased material in such a way that it can be removed cost-effectively and made non-infectious.

At the same time, in the field of fire fuels, it is well known that "densified wood" fire fuels are a clean and convenient alternative to burning cordwood and/or other firelogs which are compositions of wood materials and wax/binder materials.

Controlled burning causes such large amounts of smoke that while it does reduce fuel loading it causes large problems associated with air quality and is becoming increasingly restricted. Controlled burning has been known to become uncontrolled as well, in some cases, causing disastrous wildfire. U.S. and State Governmental Agencies have therefore become very proactive in seeking solutions that solve the problems of forest fuels seeking value-added solutions that mitigate the need for burning, as well as logging.

We were also aware of the possibilities of the synergy between the need of public sector entities to perform fuel reduction, and the need for raw materials for firelog production. Firelog production until now has typically utilized sawdust from lumbering operations, or agricultural byproducts such as orchard thinnings. In those cases the commercial viability of the firelog is based on raw materials being very low cost, allowing a low margin product to be sold as a commodity at low margins. In the model that is the method of this invention, additional value is added to the end firelog product by the manufacturer, enabling a higher margin product to then generate sufficient revenue to help offset the cost of obtaining the raw material, which supplements the public sector funding which is often unable to support the cost of fuel reduction efforts.

We researched the current art and found that while small parts of solutions to the fundamental problems facing both the firelog and forestry industry segments were present, there was a need for a creative systems approach to solving problems in both areas that created a significant "win" for all the stakeholders, by combining in a synergistic fashion the elements of well-known firelog manufacturing techniques, biomass power plant operation, forestry, thinning operations, and plant fungal pathogen biology into a comprehensive system with significant utility.

In the field of firelog production and biomass power plants it became apparent to us that the economics of the system would require utilization in inventive ways of technologies at the leading edge of the state of the art. The normal method of firelog production has typically involved the processing of mill "waste" or sawdust piles resulting from wood manufacturing operations. In one case of the manufacture of wax-and-sawdust firelogs, ground walnut shells were used. Other waste materials for firelog material such as bagasse, peanut shells, coffee grounds, and similar, are well known in the art. The use of forest materials has not been thought feasible before now, because an economic system was not sufficiently thought out to enable cost effectiveness, and material impediments such as moisture, dirt, and debris were thought to preclude firelog manufacture. We have solved all those problems.

We have studied the prior art of the firelog briquetting process and determined that the application of the heat for drying and pressure necessary for the formation of logs makes it possible to disinfect fungal diseased wood such as that prevalent in the California region, thereby eliminating several severe problems. Currently, the best known method for remediation of this infected material is to compost it and this takes approximately 30 days to completely eliminate the pathogen. Other remediation techniques are known, but the technique of firelog manufacture, when appropriately conceived and implemented, allows processing of tons of material each hour and producing a product with higher margin value than compost. The treated wood, once manufactured into a firelog, is no longer subject to the restrictions or special handling requirements that infected material is subjected to currently. For example, there are quarantine restrictions on movement of the wood when used as cut or packaged firewood. Even though movement within county boundaries is permitted it is known that the material must still be handled carefully and it is capable of spreading the pathogen to new areas. Proper manufacture of firelogs from this material essentially solves the problem of disposal of a noxious material, with benefit for all. These factors are equally applicable to wood afflicted with insect infestation.

During the period for research into these problems, and potential solutions we were finally able to implement a "proof of concept" resulting in a trial production of firelogs utilizing materials such as are described here, demonstrating, as we also developed marketing channels and a sales organization, that the value is there for a product such as described in this business method, that we are able to adapt firelog manufacturing processes such as have been the norm in the current art into a new economic and physical model that succeeds at providing solutions.

We have run tests on material provided by a processing yard to determine its characteristics and suitability for firelog production, and to validate and refine the business method and model. After cost analysis and market research on transportation costs, thinning costs, raw material availability, machine technology, and available alternatives in the current art to our processes, and spending significant time obtaining sources for appropriate equipment we have completed a system capable of making high value consumer firelogs from unwanted forest, woodland, and wildland/urban interface greenwaste, including diseased fungal-infected noxious material.

### Summary of the Disclosure

The method of our invention is comprises of the application of processes to take unwanted forest fuel loads in woodland, forested, and wild-land/urban interface areas, including diseased and fungal-infected wood, and process this unwanted fuel into densified firelogs, enabling profits from sale of such firelogs to be used to make the clearing of unwanted fuels cost-effective, funded in part or total by proceeds of the same of the firelog product.

This method and process, in the context of solving the problem of unwanted forest fuel buildup, allows reduction of fuel to be funded without resorting to practices that are injurious to the environment and undesirable to large segments of the population, because the need to cut large timber as a means of paying for fuel reduction efforts is reduced or mitigated. Our method provides a market for the lowest value residue of such thinning operations, allowing thinning and fuel reduction operations to take place where it has been economically infeasible to do so previously, so that more hazardous fuel can be eliminated from the environment. Application of this method reduces the need to control fuel buildup by means of controlled burns, which are hazardous, polluting, and difficult to instigate.

It also solves a significant problem by providing a business method where the added value of the end product provides a higher margin than most other large-scale uses of the material, such as in firing biomass power plants. The competition in the marketplace for power plant fuel, because of very low cost fossil fuels, drives down the value of the wood material for this purpose. Additionally, transportation of this low-value material for power plant utilization is economically infeasible, whereas the method of our invention can be relocated to near or at the source of the material, substantially reducing or eliminating transport costs.

Our process and method also provide the opportunity to improve air quality, as the densified wood firelogs burn cleaner than alternatives such as the wax logs which emit petrochemical byproducts, and firewood which emits twice the particulate material (soot).

In accordance with one aspect of the disclosure, a method of manufacturing packaged wood fuel products is disclosed, which comprises the steps of gathering secondary forest growth, grinding the secondary forest growth into coarse ground material, grinding the air-dried coarse ground material into finely ground material, kiln drying the finely ground material, extruding the finely ground material and binder into a firelog, and packaging the firelog.

In accordance with another aspect of the disclosure, a method of doing business is disclosed which comprises the steps of mechanically thinning a wooded area, the mechanical thinning gathering dead wood, diseased wood, and underbrush, grinding the dead wood, diseased wood and underbrush into a coarse ground material, the grinding being performed by a grinder powered by an electrical power generating facility which is powered by burning the dead wood, diseased wood and underbrush, grinding the coarse ground material into finely ground material, the grinding of the coarse ground material into the finely ground being performed by a grinder powered by an electrical power generating facility which is powered by burning the dead wood, diseased wood and underbrush, drying the finely ground material in a kiln, or dryer such as a rotary sawdust dryer powered by an electrical power generating facility which itself is powered by burning dead wood, diseased wood and underbrush and which uses as a heat source a burner which utilizes as fuel some of the coarse ground material and finely ground material as appropriate, extruding the finely ground material into a firelog using a firelog extruder powered by an electrical power generating facility which itself is powered by burning dead wood, diseased wood and underbrush, selling the firelog, and using proceeds from selling the firelog to pay for the thinning step.

These and other aspects and features of the disclosure will become more readily apparent upon reading the following detailed description when taken in conjunction with the accompanying drawings.

### Brief Description of the Drawings

Fig. 1 is a schematic diagram of the manufacturing and business methods of the present disclosure; and

Fig. 2 is a flow chart of a sample sequence of steps which can be taken in conjunction with the teachings of the present disclosure.

While the disclosure is susceptible to various modifications and alternative constructions, certain illustrative embodiments thereof have been shown in the drawings and will be described below in detail. It should be understood, however, that there is no intention to limit the disclosure to the specific forms disclosed, but on the contrary, the intention is to cover all modifications, alternative constructions, and equivalents falling within the spirit and scope of the disclosure as defined by the appended claims.

### Detailed Description of the Disclosure

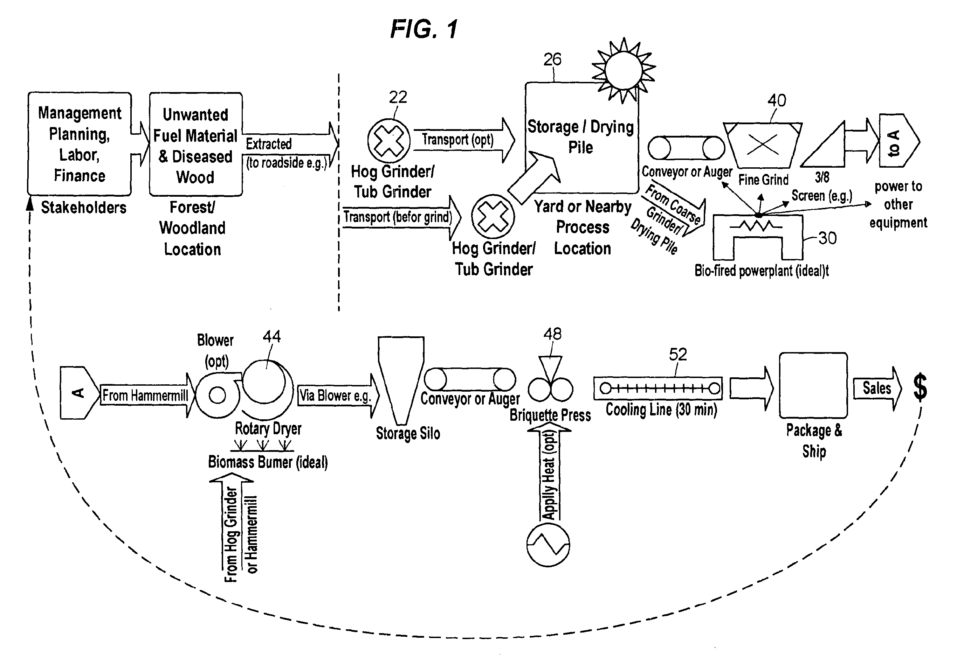

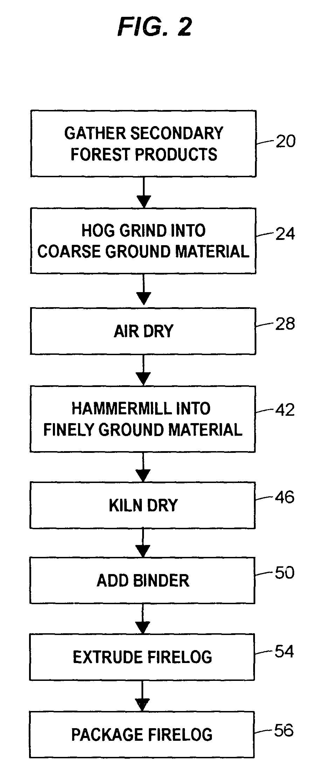

The methods and apparatus of the present invention will now be described with simultaneous reference to Figs. 1 and 2. Mechanical thinning of woodland, forest, or world-land/urban interface is performed by means well known to practitioners of such operations. In this operation and by means of the system according to the present disclosure, it is not necessary to harvest or damage large trees not deemed to be part of the area fire fuel load. Material such as woody underbrush, manzanita, down, dead, and even rotting wood, is gathered in this step, leaving viable trees alone. Material infected with a fungal pathogen such as that causing Sudden Oak Death is equally desirable and suitable. The gathering of such "secondary forest products" is reflected by step 20 in Fig. 2.

The material as gathered is then processed by a suitably-sized wood reduction apparatus 22 such as a "hog grinder," or "tub grinder," which may be at a site immediately adjacent to a location at which the secondary forest products are gathered during the thinning operations. This is shown in step 24. A device such as that manufactured by Morbark Corporation of Winn, Minnesota, may be utilized, though this is merely illustrative and other devices may be used according to the amount of material, its type, and the physical or topographical attributes of the clearing site. Special consideration must be given in the processing of fungal-infected wood to ensure that spores and infected material are not unduly spread in this operation.

The resulting coarse-ground material is then fed by a discharge conveyer 26 attached to the grinder directly into a suitably sized conveyance. An open truck as is commonly used for hauling various types of construction and demolition waste may be used but other types may be used according to the amount and location of the thinned material.

In an alternative, but equally preferable embodiment of the system according to the invention, it may be more economical to transport the thinned material directly, delaying the grinding operation until after transport. This can be preferable if the amount of material and/or its location makes it infeasible for locating a suitable grinder at the location of the thinning operation.

The ground material is then transported to a yard 26 or area for temporary storage. Alternatively, if it was deemed infeasible to grind the material at the thinning location then the grinder can be located at the storage yard, and grinding operation can then be performed.

In an alternative, but equally preferable embodiment of the system according to the invention, the operation can be carried out very near to the thinning operation, by equipment that has been adapted for mobile operation, and is sized and modularized for mobility enabling the processing to take place without truck transport of material. An illustrative example of such a system is one based on the B10 BI Compactor manufactured by PLC Products Ltd. of the United Kingdom.

The ground material located at the yard may be left to air dry in the sun for a period of time as shown in a step 28. The economic advantage of sun-drying is that it reduces the energy required for the final drying of material to the necessary moisture level. The period of time necessary for the material to dry is dependent on the coarseness of the material, its moisture content, and ambient humidity. In the preferred embodiment of the system according to the invention, the material is reduced as close as is practical to approximately a fifteen percent moisture content. It may be necessary for the drying time to be shortened because the material should not begin to decompose or compost.

This material can also be fed to a biomass-burning electrical generator 30 of appropriate size, such as the "Agripower" Portable Biomass Generator manufactured by PMC Production LLC of Rancho Cordova, California. Such a generator provides electrical power to the rest of the firelog production equipment. In an alternative embodiment, because of varying economics of the particular site and operation, the sun drying step can be omitted and the material instead further processed by mobile equipment and the power plant mentioned above.

After air drying, the dried material is then further reduced in size by a fine-grinding operation such as that performed by a hammermill device 40, fitted with a 3/8" screen, in a step well known to those familiar with the art. As with the "hog grinding" operation mitigation of the spread of any infected wood material must be implemented. This is shown by a step 42 in Fig. 2.

Next, the fine-ground material is conveyed to a drying mechanism, such as a kiln, solar powered dryer, or rotary dryer 44 like those typically used for sawdust drying.
The requirement of the drying mechanism is to reduce the overall moisture content of the ground material between approximately five and fifteen percent as shown by a step 46. The sun drying reduces the amount of energy that must be expended in the dryer in order to reach the necessary moisture content. The dryer may be fueled by the wood material derived from the previous steps, and powered electrically by the biomass generator 30. In the drying step, applicants have determined that undesirable material in the wood feedstock is extracted from the flow, and special attention to this extraction according to the method of the invention eliminates concern over undesirable material being incorporated into the logs. The temperature in the dryer may also be sufficient to disinfect diseased wood materials. At the operating temperature of the dryer, any pathogens are eliminated from the materials.

The kiln or rotary dried material is then conveyed, with any appropriate intermediate storage, to a wood-firelog-densification machine 48, which produces highly compacted wood cylinders usable for wood fuel according to methods of the art. For example, a machine manufactured by A-Costa of Italy, model number I-95 can be used, but this is illustrative and not restrictive. The conditions in the firelog machine are such that sufficient heat and pressure are created and applied to further cause the disinfection of fungal diseased materials. This entails temperatures in the range of approximately one hundred eighty degrees Fahrenheit for up to thirty minutes as the material experiences high pressure being rammed through an extrusion die, with the optional addition of an external heat source to achieve desired temperatures. A binder or wax can be added to the firelog ground material prior to extrusion as shown in a step 50 to thus facilitate the begetting or manufacturing process.

The material then is pushed down a cooling line 52 for the remaining time during with it gradually cools to a manageable temperature. At the end of such a process, the threat of the fungal infection spreading from the material is abated. The densified wood fuel is then packaged and sold as a commodity or consumer product according to the tastes and preferences of the market. The final steps 54 and 56, respectively, allow the economic system according to the disclosure to function, in that proceeds of the sale of such wood fuel can then be used to pay for the management, planning, and labor implementation of prior operations.

Additional efficiencies are realized when the steps noted above are performed in close proximity to the location at which the secondary forest products are gathered. For example, at least two, and possibly more, of the steps of coarse grinding, air drying, fine grinding, drying, adding binder, extruding, and packaging may be performed near the gathering location to minimize transport or other costs.

In an alternative yet equally preferable embodiment of the system according to the invention, an artificial firelog comprised only partly of the material can also be produced. This may be the most cost effective means of high-value utilization of the material, depending on specific factors of local markets, distribution channels, quantities of materials available, and commercial considerations. For example, under certain conditions a wax-and-wood final product is an equally preferable end product, in that it permits the economic and business method of the invention to operate where it may not otherwise be feasible. Certain lightweight mobile compactors may require additional binder material in order to provide a log product while remaining small enough to move easily.

The method of the disclosure may also be shown to be effective on other types of diseased wood material, such as bacterial infection, or live organism infection such as beetle infestation. The description of fungal infected wood material should be construed as illustrative and not limiting in the possible beneficial application of the method of this disclosure.

In the method according to the invention, a chain of services is provided according to the method of the invention, all of which must be funded by some means. In the current state of the art, there are limited uses for such ground material as produced above, such as mulch, garden soil amendment, and so forth. The economic value of the material in such use is low, making it difficult to justify the costs of those steps without subsidy or assistance from public funds. Such funds are limited and always subject to reductions and competition from other activities also needing public funding.

By the method taught by this disclosure, the wood fuel manufactured is a higher-margin product than other currently available products made from the material provided by thinning of unwanted or low-value forest residue, including diseased wood. The increased revenue per unit of material (whether by weight or by volume) enables the private sector, utilizing such a system to fund the important but relatively expensive thinning and grinding operations. Important utility is provided in support of fuel reduction, treatment of noxious diseased materials, air quality, and job creation.

## Claims

1. A method of manufacturing packaged wood fuel products, comprising:
gathering secondary forest products;
grinding the secondary forest products into coarse ground material;
grinding the coarse ground material into finely ground material;
drying the finely ground material;
extruding the finely ground material into a firelog; and
packaging the firelog.

2. The method of claim 1, further including the step of air drying the coarse ground material prior to grinding the coarse ground material into finely ground material.

3. The method of claim 1, further including the step of adding a binder to the finely ground material prior to extruding the firelog.

4. The method of claim 1, wherein the coarse ground material is less than one inch in diameter.

5. The method of claim 1, wherein the coarse ground material is air dried to a moisture content of approximately fifteen percent.

6. The method of claim 1, wherein the finely ground material is less than approximately 3/8 inch in diameter.

7. The method of claim 1, wherein the finely ground material is dried to a moisture content of between five and fifteen percent.

8. The method of claim 1, wherein at least two steps from a group of steps comprising the coarse grinding, fine grinding, drying, extruding and packaging steps are performed in immediate proximity to a location at which the secondary forest products are gathered.

9. The method of claim 1, wherein electrical power is provided to machinery and equipment by an electrical generating facility that uses at least one material selected from a group of materials comprising the secondary forest products, coarse ground material, and finely ground material as a fuel source.

10. The method of claim 1, wherein the drying is performed using a dryer fueled by at least one material selected from a group of materials comprising the secondary forest products, coarse ground material, and finely ground material.

11. The method of claim 1, wherein the drying and extruding steps are performed at a temperature and pressure sufficient to disinfect diseased wood materials.

12. A method of doing business, comprising:
mechanically thinning a wooded area, the mechanical thinning gathering secondary forest products;
grinding the secondary forest products into a coarse ground material;
grinding the coarse ground material into finely ground material,
drying the finely ground material;
extruding the finely ground material into a firelog;
selling the firelog; and
using a portion of the proceeds from selling the firelog to offset the costs of the thinning step.

13. The method of claim 12, wherein at least two steps from a group of steps comprising the coarse grinding, fine grinding, drying, extruding and packaging steps are performed in immediate proximity to a location at which the secondary forest products are gathered.

14. The method of claim 12, further including air drying the coarse ground material before grinding the coarse ground material into finely ground material.

15. The method of claim 14, wherein at least two steps from a group of steps comprising the coarse grinding, air drying, fine grinding, drying, extruding and packaging steps are performed in immediate proximity to a location at which the secondary forest products are gathered.

16. The method of claim 12, further including adding a binder to the finely ground material prior to extruding the firelog.

17. The method of claim 16, wherein at least two steps from a group of steps comprising the coarse grinding, fine grinding, drying, adding, extruding and packaging steps are performed in immediate proximity to a location at which the secondary forest products are gathered.

18. The method of claim 12, wherein the extruding step is performed at a temperature and pressure sufficient to disinfect diseased wood materials.

19. The method of claim 12, where electrical power is provided to machinery and equipment by an electrical generating facility that uses at least one material from a group of materials comprising the secondary forest products, coarse ground material, and finely ground material as its fuel source.

20. The method of claim 12, where the dryer is fueled by burning at least one material selected from a group of materials comprising the secondary forest products, coarse ground material, and finely ground material.
